# EUROPEAN PATENT APPLICATION

(11) **EP 2 169 538 A1**
(43) Date of publication of application: **31.03.2010**
(21) Application number: 07767263.2
(22) Date of filing: 20.06.2007
(51) Int. Cl.: G06F 9/38

(54) **INSTRUCTION PROCESSOR**

(71) Applicant: Fujitsu Limited, Kawasaki-shi, Kanagawa 211-8588 (JP)
(72) Inventor: YOSHIDA, Toshio, Kawasaki-shi Kanagawa 211-8588 (JP)
(74) Representative: Wilding, Frances Ward
(86) International application number: PCT/JP2007/062425
(87) International publication number: WO 2008/155839

(57) **Abstract**

The present invention includes a decode section (109) for simultaneously holding a plurality of instructions in one thread at a time and for decoding the held instructions; an execution pipeline (220) capable of simultaneously executing each processing represented by the respective instructions belonging to different threads and decoded by the decode section (109); a reservation station (210) for receiving the instructions decoded by the decode section and holding the instructions, if the decoded instructions are of sync attribute, until executable conditions are ready and thereafter dispatching the decoded instructions to the execution pipeline (220); a pre-decode section (108) for confirming by a simple decoding, prior to decoding by the decode section (109), whether or not the instructions are of sync attribute; and an instruction buffer (104) for suspending issuance to the decode section (109) and holding the instructions subsequent to an instruction of sync attribute.

## Description

### Technical Field

The present invention relates to an instruction control processing apparatus equipped with a simultaneous multi-threading function of executing simultaneously two or more threads each composed of a series of instructions expressing a processing.

### Background Art

An instruction expressing a processing is processed in an instruction processing apparatus typified by a CPU, through a series of steps such as fetching of the instruction (fetch), decoding of the instruction (decode), execution of the instruction, and committing a result of the execution (commit). Conventionally, there is a processing mechanism called pipeline to speed up processing at each step in an instruction processing apparatus. In the pipeline, a processing at each step like fetching and decoding is performed in each separate small mechanism. This enables, for example, concurrent execution of another instruction while executing one instruction, thereby enhancing the speed of processing in the instruction processing apparatus.

Recently, a processing mechanism called superscalar provided with two or more pipelines to further enhance the speed of processing is widely used. As a function to realize ever faster processing in the superscalar, there is a function called out-of-order execution.

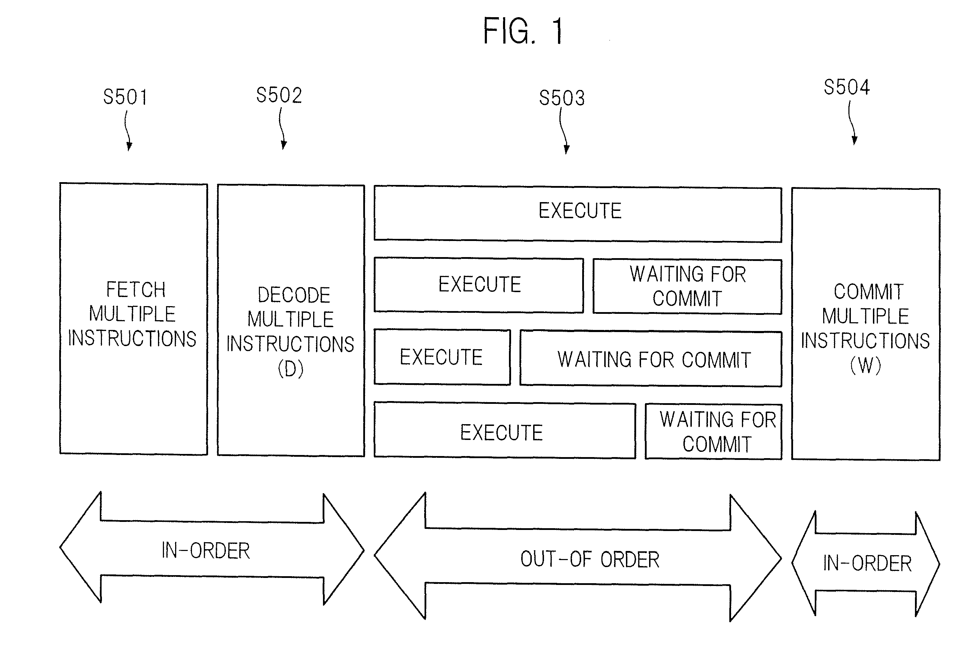

FIG. 1 is a conceptual diagram illustrating out-of-order execution in the superscalar.

FIG. 1 illustrates one example of the out-of-order execution in the superscalar.

In the example of FIG. 1, four instructions are being processed. Each instruction is processed through four steps of fetching (step S501), decoding (step S502), execution (step S503), and committing (step S504) . To the four instructions, fetching (step S501), decoding (step S502), and committing (step S504) are executed by in-order execution that executes a processing in program order. And execution of instructions (step S503) is executed by out-of-order execution that executes a processing irrelevant to program order.

The four instructions are fetched in the program order (step S501) and decoded (step S502). Thereafter, the instructions are placed for execution (step S503) not in that order, but in order of readiness in which an instruction ready with calculation data or the like (operand) necessary for execution (step S501) comes first. In the example of FIG. 1, the four instructions obtain operands at the same time, and execution of the instructions is started simultaneously.

In this way, out-of-order execution enables two or more instructions to be processed simultaneously in parallel irrelevant to processing order in a program, thereby enhancing the speed of processing in an instruction processing apparatus.

After the execution (step S503), committing (step S504) of the four instructions is performed by in-order execution according to a program order. Any subsequent instructions having completed the execution (step S503) ahead of its preceding instruction in this processing order is put into a state of waiting for committing until its preceding instruction finishes the execution (stepS503). In the example of FIG. 1, execution (step S503) of the four instructions is illustrated in four stages such that an instruction at the topmost stage in the drawing is processed first in the program order. In the example of FIG. 1, since the instruction illustrated at the topmost stage, which is processed first takes a longest time to complete the execution (step S503), other three instructions are waiting for committing.

Incidentally, of recent, many programs processed in an instruction processing apparatus are each composed by combining two or more processing units (threads) made up of a series of instructions, which units may be executed simultaneously in parallel.

Many instruction processing apparatus contain two or more computing units for executing instructions. When instructions are executed, in most cases, only a part of the computing units is used in each cycle, allowing sufficient leeway for operating ratio of the computing units.

In this regard, as a technique of improving the operating ratio of the computing units, there is proposed a technique of Simultaneous Multi Threading (SMT) function to process instructions in multiple threads simultaneously by allocating a computing unit that is no longer used in one thread to another thread in each cycle.

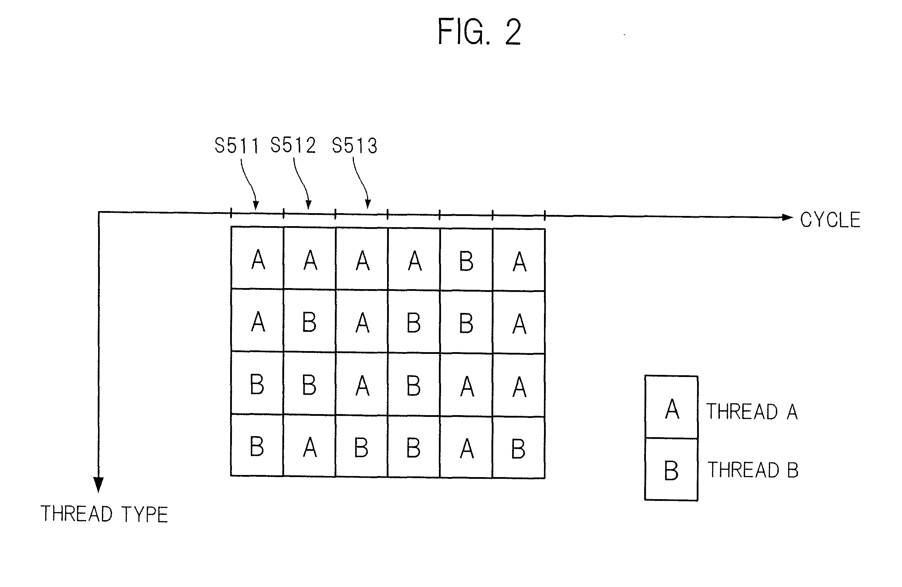

FIG. 2 is a conceptual diagram illustrating one example of the SMT function.

FIG. 2 illustrates a state in which instructions that belong to two types of threads, thread A and thread B are executed by the SMT function. Each of the four cells arranged along a vertical axis in FIG. 2 represents a computing unit for executing instructions in an instruction processing apparatus. Letters A and B written in each of the cells indicate the type of a thread of instructions to be executed in the corresponding computing units.

Further, a lateral axis indicates clock cycle in the instruction processing apparatus. In the example of FIG. 2, in the first cycle (step S511), instructions in thread A are executed in two computing units at upper stages whereas instructions in thread B are executed in two computing units at lower stages. In the second cycle (step S512), instructions in threadAare executed in the uppermost and lowermost computing units whereas instructions in thread B are executed in two computing units at middle stages. Further, in the third cycle (step S513), instructions in thread A are executed in three computing units at upper stages whereas instructions in thread B are executed in one computing unit at the lowermost stage.

In this way, the SMT function executes instructions in multiple threads simultaneously in parallel in each cycle.

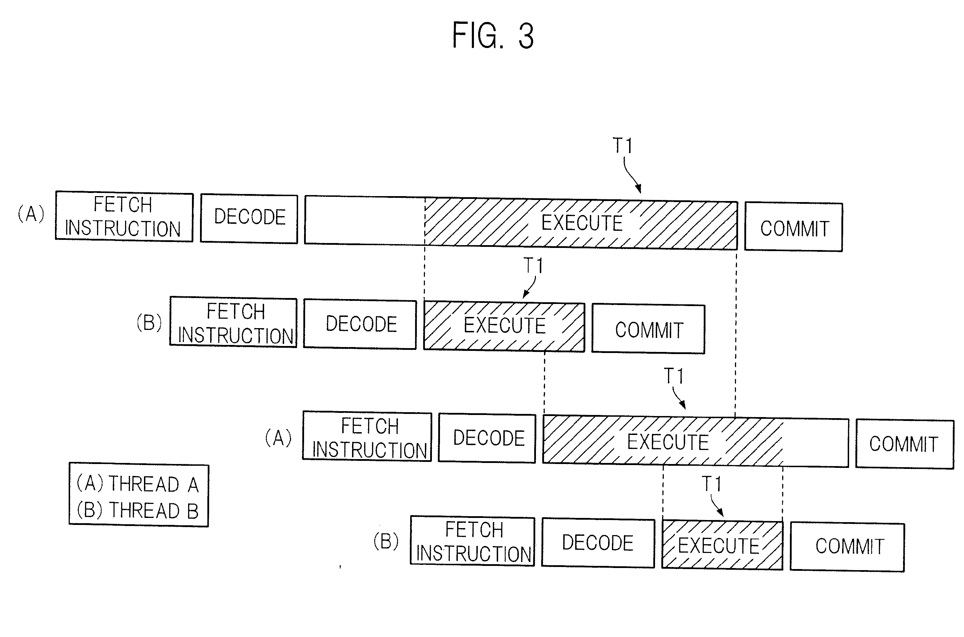

FIG. 3 is another conceptual diagram, different from FIG. 2, illustrating one example of the SMT function.

In the example of FIG. 3, after instructions that belong to two types of threads, thread A and thread B are alternately fetched and decoded, the instructions are executed simultaneously in parallel between the two types of threads as illustrated in FIG. 2, when an operand or a computing unit necessary for the execution of each instruction is obtained. In the example of FIG. 3, in timings T1 illustrated as diagonally shaded areas in the drawing, the instructions are executed simultaneously in parallel between the two types of threads.

As to committing, between threads of a same type, it is impossible to commit any subsequent instruction until all preceding instructions have been committed. However, between threads of different types, it is possible to commit any subsequent instruction without waiting for its preceding instruction to finish committing. In the example of FIG. 3, fetched instructions in thread B are committed without waiting for fetched instructions in thread A to finish committing.

As described with reference to FIGS. 2 and 3, according to the SMT function, it is possible to execute instructions simultaneously in parallel between plural types of threads. Further, between different types of threads, it is possible to commit a subsequent instruction without waiting for its preceding instruction to finish committing, and therefore the efficiency in processing of the instruction processing apparatus is improved.

An instruction processing apparatus with the SMT function contains so-calledprogram visible components in equal number of threads, to enable simultaneous execution of instructions between different types of threads. Access to the program visible components is directed in a program. On the other hand, computing units and a decode section are often commonly used between different types of threads. As described above, as to the computing units, since plural computing units are allocated and used between plural types of threads, it is possible to execute instructions simultaneously between plural types of threads without providing computing units in equal number of threads. However, as to the decode section, since its circuit structure is complicated and large-scaled, in many cases only one decode section is provided in contrast to the computing units. In this case, the decode section is commonly used between plural types of threads, and instructions of only one thread may be decoded at a time. Here, some instructions are prohibited from being executed simultaneously with preceding instructions in a same thread. Conventionally, if decoded instructions are of such instructions prohibited from concurrent execution, the instructions are held in the decode section until they become executable. As a result, the decode section is occupied by a thread of the instructions prohibited from concurrent execution and decoding of other thread is made impossible.

Here, regarding an instruction processing apparatus of although single-threading type for processing a single-threadedprogram, there is proposed a technique of moving instructions prohibited from concurrent execution into a predetermined memory after decoding so that the decode section is made available to a subsequent instruction and of executing the instructions prohibited from concurrent execution after obtaining an execution result of a preceding instruction (See Japanese Laid-open Patent Publication No. H07-271582, for example). This technique enables the above-described out-of-order execution without delay. However, even if this technique is applied to an instruction processing apparatus with the SMT function, a subsequent instruction in the same thread as the instructions prohibited from concurrent execution is made to wait for committing until the instructions prohibited from concurrent execution to complete committing. In this way, even if the occupied state of the decode section may be temporarily avoided, the decode section will be eventually occupied by an instruction of the same thread.

Additionally, there is also proposed a technique that, if instructions in one thread are prohibited from concurrent execution, revokes the instructions prohibited from concurrent execution after decoding, to make the decode section available to the other thread, and starting over the instructions prohibited from concurrent execution from fetching (See Japanese Laid-open Patent Publication No. 2001-356903, for example).

However, according to the technique disclosed in the Japanese Laid-open Patent Publication No. 2001-356903, the instructions prohibited from concurrent execution are started over again from fetching, which wastes the once completed fetching and decoding of the instructions, raising a problem that the efficiency of processing in the instruction processing apparatus declines.

The present invention is made in consideration of the above-described circumstances, and an object thereof is to provide an instruction processing apparatus capable of processing instructions efficiently.

### Disclosure of Invention

According to an aspect of the invention, an instruction processing apparatus includes:
a decode section to decode a predetermined number of instructions simultaneously, of a thread having plural instruction queues;
an instruction execution section to execute the instructions decoded by the decode section;
a pre-decode section to determine whether or not instructions to be decoded by the decode section is prohibited by a predetermined condition from being executed simultaneously with another preceding instruction in a same thread;
an instruction hold section to hold the instructions decoded by the decode section until the prohibition is released, in a case where simultaneous execution of the instructions decoded by the decode section is prohibited by the determination; and
an instruction issue section to hold instructions subsequent to the decoded instructions without issuing to the decode section, in a case where simultaneous execution of the instructions decoded by the decode section is prohibited by the determination.

In the instruction processing apparatus of the present invention, it is typical that, in a case where the instruction issue section holds instructions without issuing to the decode section, the instruction issue section issues instructions obtained from another thread different from one thread to which the held instructions belong, to the decode section.

According to the instruction processing apparatus of the present invention, if decoded instructions are prohibited from simultaneous execution with another instructions preceding to the decoded instructions in a same thread, the decoded instructions are held in the instruction hold section, and subsequent instructions in the same thread are held without being issued to the decode section. By this, for example, it is possible to avoid a situation in which the decode section is occupied by the instructions prohibited from simultaneous execution and thus decoding of instructions in another thread is hindered. Further, since the subsequent instructions are held in the instruction issue section, the process of obtaining the subsequent instructions is not wasted and thus efficient. That is, the instruction processing apparatus of the present invention enables instructions to be processed efficiently.

In the instruction processing apparatus of the present invention, it is preferable that, in a case where the instruction issue section holds instructions subsequent to the instruction prohibited from simultaneous execution in a same thread, without issuing to the decode section, the instruction issue section obtains data indicating that an executable condition is ready for the instruction prohibited from simultaneous execution and restarts issuing the held instructions to the decode section.

According to the instruction processing apparatus of this preferable mode, restarting issuance of the subsequent instructions are still more surely performed by using the above-described data.

In the instruction processing apparatus of the present invention, it is preferable that the pre-decode section puts a flag to each of instructions to indicate whether or not the instructions are prohibited from the simultaneous execution, and the instruction issue section includes an instruction buffer portion to accumulate the instructions with the flags for issuing to the decode section, in a same order as in each thread, issues the instructions accumulated in the instruction buffer portion to the decode section in order of accumulation, and holds instructions subsequent to an instruction whose flag indicates that the simultaneous execution is prohibited, without issuing to the decode section.

According to the instruction processing apparatus of this preferable mode, suspending issuance of the subsequent instructions are still more surely performed by using a flag put to instructions by the decode section.

In the instruction processing apparatus of the present invention, it is also preferable that, in a case where the instruction hold section holds a plurality of instructions that are prohibited from the simultaneous execution, and when executable conditions are simultaneously ready for the plurality of instructions, the instruction hold section dispatches the plurality of instructions in order in which an instruction held first is dispatched first to the execution section.

As described above, in the instruction processing apparatus of the present invention, the number of instructions held simultaneously in the instruction hold section and prohibited from simultaneous execution is one in one thread. However, there is a possibility of holding instructions of plural threads that are prohibited from simultaneous execution in the instruction hold section. According to the instruction processing apparatus of this preferable mode, in this case, the instruction hold section dispatches the plurality of instructions in a descending order in which the instructions are held, to the instruction execution section, when executable conditions are simultaneously ready for the instructions. This enables sure avoidance of a trouble that instructions of a particular type in one thread are left for a long time in the instruction hold section.

According to the present invention, it is possible to obtain an instruction processing apparatus that are capable of processing instructions efficiently.

### Brief Description of Drawings

FIG. 1 is a conceptual diagram illustrating out-of-order execution in a superscalar.
FIG. 2 is a conceptual diagram illustrating one example of a SMT function.
FIG. 3 is another conceptual diagram, different from FIG. 2, illustrating one example of the SMT function.
FIG. 4 is a diagram of a hardware structure of a CPU that is one embodiment of an instruction processing apparatus.
FIG. 5 is a conceptual diagram illustrating processing of an instruction of sync attribute in a CPU 10 of FIG. 4.
FIG. 6 is a diagram of the CPU 10 in FIG. 4, partially simplified and partially illustrated in functional blocks, to explain the processing of an instruction of sync attribute.
FIG. 7 illustrates a state in which an instruction buffer 104 issues instructions immediately before an instruction of sync attribute to a decode section 109 and suspends issuing and holds subsequent instructions.
FIG. 8 illustrates entries contained in reservation stations in detail.
FIG. 9 is a conceptual diagram illustrating how a register is updated by in-order execution in a CSE 127.
FIG. 10 illustrates a check circuit for checking whether or not reset of a sync flag is possible for instructions of non-oldest type.
FIG. 11 illustrates an arbitration circuit.
FIG. 12 illustrates an example in which two read ports are provided.
FIG. 13 illustrates a state in which one read port is provided in the present embodiment.
FIG. 14 illustrates a check circuit for checking whether or not reset of a sync flag is possible for instructions of oldest type.

### Best Mode for Carrying Out the Invention

Hereinafter, one embodiment of the instruction processing apparatus will be described with reference to drawings.

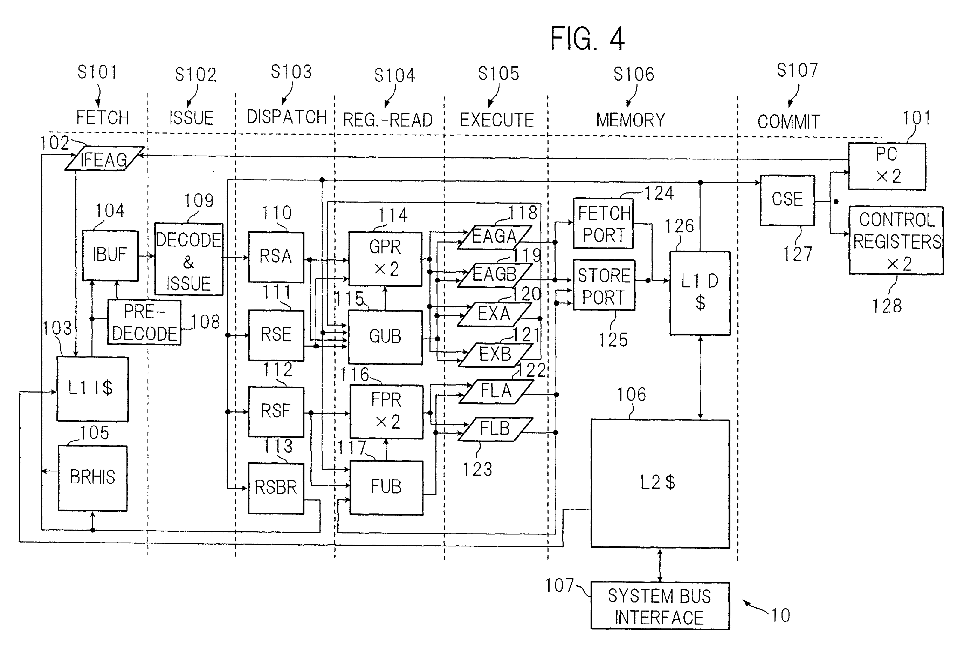

FIG. 4 is a diagram of a hardware structure of a CPU that is one embodiment of the instruction processing apparatus.

The CPU 10 illustrated in FIG. 4 is an instruction processing apparatus with the SMT function of processing instructions of two types of threads simultaneously. The CPU 10 sequentially performs processing at the following seven stages. Namely, fetch stage at which instructions of two types of threads are alternately fetched by in-order execution (step S101); decode stage at which a processing represented by the fetched instructions is decoded by in-order execution (step S102); dispatch stage at which the decoded instructions are stored by in-order execution, into an after-mentioned reservation station connected to a computing unit necessary for executing processing of the instructions, and the stored instructions are dispatched to the computing unit by out-of-order execution (step S103); register reading stage at which an operand necessary for executing the instructions stored into the reservation station is read from a register by out-of-order execution (step S104) ; execution stage at which the instructions stored into the reservation station are executed with the use of the operand read from the register by out-of-order execution (step S105); memory stage at which a result of the execution is recorded into a memory outside the CPU 10 by out-of-order execution (step S106); and commit stage at which a register or the like for storing an operand is updated in accordance with the execution result and the execution result is committed to become visible from a program by in-order execution (step S107). The processes at these seven stages are sequentially executed.

Hereafter, each stage will be explained in detail.

At the fetch stage (step S101), two program counters 101 provided for two types of threads (thread 0, thread 1), respectively, giveacommandoffetchinghow-manieth (aposition in a sequence) instruction in order of description in each thread. And in a timing at which the respective counters 101 give the command of fetching an instruction, an instruction fetch section 102 fetches the specified instruction from an instruction primary cache 103 into an instruction buffer 104. The two program counters 101 are alternately operated and in one-time fetching, either of the program counters 101 gives a command of fetching an instruction in a thread corresponding to the program counter. In this embodiment, in one-time fetching, eight instructions are fetched in order of processing in the threads by in-order execution. Here, there is a case in which the processing order by in-order execution may branch from the description order of the instructions in the threads. The CPU 10 is provided with a branch prediction section 105 for predicting presence or absence of branch and a branch destination in the threads as well. The instruction fetch section 102 fetches instructions by referring to a predicted result of the branch prediction section 105.

A program executed by the CPU 10 of the present embodiment is stored in an external memory (not illustrated). The CPU 10 is connected to the external memory or the like via a system bus interface 107 that is incorporated in the CPU 10 and connected to a secondary cache 106. When the program counters 101 give a command of fetching an instruction, the instruction fetch section 102 refers to a predicted result of the branch prediction section 105 and requests the instruction primary cache 103 of eight instructions. Then, the requested eight instructions are inputted from the external memory via the system bus interface 107 and the secondary cache 106 into the instruction primary cache 103, and the instruction primary cache 103 issues these instructions to the instruction buffer 104. At this time, in the present embodiment, a pre-decode section 108 performs simple decoding (pre-decoding) to each of the instructions at issuing. And the pre-decode section 108 puts a flag representing an after-mentioned result by the pre-decode section to the instructions to be issued to the instruction buffer 104.

At the decode stage (step S102), the instruction buffer 104 issues four instructions out of the eight instructions that are fetched and held by the instruction fetch section 102 to a decode section 109 by in-order execution. The decode section 109 decodes the four issued instructions by in-order execution, respectively. At decoding, numbers of "0" to "63" are assigned to each of the instructions as Instruction IDentification (IID) in order of decoding in the respective threads. In this embodiment, when instructions in the thread 0 are decoded, IIDs of "0" to "31" are assigned to them, whereas when instructions in the thread 1 are decoded, IIDs of "32" to "63" are assigned to them. The decode section 109 sets the IIDs assigned to the instructions targeted for decoding to vacant entries in an entry group to which the instructions targeted for decoding belong, of an after-mentioned Commit Stack Entry (CSE) 127. The CSE 127 contains 64 entries in all, 32 entries for the thread 0 and 32 entries for the thread 1.

The decode section 109 determines a computing unit necessary to execute processing of each instruction, for each of the decoded four instructions each assigned with an IID. The decoded instructions are stored into a reservation station connected to a computing unit necessary to execute processing of the decoded instructions by in-order execution.

The reservation station holds plural decoded instructions and at the dispatch stage (step S103), dispatches each instruction to a computing unit by out-of-order execution. That is, the reservation station dispatches instructions to computing units, from an instruction that has secured an operand and a computing unit necessary to execute processing, regardless of processing order in the threads. If there are plural instructions ready to be dispatched, one having been decoded first among them is dispatched first to a computing unit. The CPU 10 of this embodiment contains four types of reservation stations. They are a Reservation Station for Address generation (RSA) 110, a Reservation Station for fix point Execution (RSE) 111, a Reservation Station for Floating point (RSF) 112, and a Reservation Station for BRanch (RSBR) 113. The RSA 110, RSE 111, and RSF 112 are each connected to its corresponding computing unit via registers for storing operands. In contrast to this, the RSBR 113 is connected to the branch prediction section 105 and is responsible for giving a command of waiting for a confirmation of a predicted result by the branch prediction section 105 and of re-fetching an instruction when prediction is failed.

At the register reading stage (step S104), operands in the registers are read by out-of-order execution. That is, an operand in a register connected to a reservation station having dispatched instructions is read and dispatched to a corresponding computing unit, regardless of processing order in the threads. The CPU 10 contains two types of registers, a General Purpose Register (GPR) 114 and a Floating Point Register (FPR) 116. Both of the GPR 114 and FPR 116 are registers visible to a program and provided for the thread 0 and the thread 1, respectively. To the GPR 114 and FPR 116, buffers are connected, respectively, to hold a result of execution of an instruction until when the respective registers are updated. To the GPR 114, a GPR Update Buffer (GUB) 115 is connected, whereas to the FPR 116, a FPR Update Buffer (FPR) 116 is connected.

Since address generation and fix point execution are performed with the use of an integer operand, the GPR 114 is connected to the RSA 110 and the RSE 111. Further in this embodiment, since fix point execution using an operand held in the GUB 115 at a stage before updating the GPR 114 is allowed, the GUB 115 is also connected to the RSA 110 and the RSE 111. Furthermore, since floating-point execution is performed with the use of a floating-point operand, the FPR 116 is connected to the RSF 112. Moreover, in this embodiment, since floating-point execution using an operand held in the FUB 117 is allowed, the FUB 117 is also connected to the RSF 112.

The CPU 10 of the present embodiment further includes: two address generation units, Effective Address Generation unit A (EAGA) 118 and B (EAGB) 119; two fix point EXecution unitA (EXA) 120andB (EXB) 121; and two FLoating-point execution unit A (FLA) 122 and B (FLB) 123. The GPR 114 and the GUB 115 are connected to the EAGA 118, the EAGB 119, the EXA 120, and the EXB 121, which use an integer operand. The FPR 116 and the FUB 117 are connected to the FLA 122 and the FLB 123 that use a floating-point operand.

At the execution stage (step S105), a computing unit executes instructions by out-of-order execution. That is, among the multiple types of computing units, a computing unit with an instruction dispatched from a reservation station and with an operand necessary for execution dispatched from a register executes processing of the dispatched instruction with the use of the dispatched operand, regardless of processing order in the threads. Additionally, at the execution stage (step S105), while one computing unit is executed, if an instruction and an operand are dispatched to other computing unit, the one and the other computing units execute processing concurrently in parallel.

At the execution stage (step S105), when an instruction of address generation processing is dispatched from the RSA 110 and an integer operand is dispatched from the GPR 114 to the EAGA 118, the EAGA 118 executes the address generation processing with the use of the integer operand. Also, when an instruction of fix point execution processing is dispatched from the RSE 111 and an integer operand is dispatched from the GPR 114 to the EXA 120, the EXA 120 executes the fix point execution processing with the use of the integer operand. When an instruction of floating point execution processing is dispatched from the RSF 112 and a floating point operand is dispatched from the FPR 116 to the FLA 122, the FLA 122 executes the floating point execution processing with the use of the floating point operand.

Since execution results of the EAGA 118 and the EAGB 119 are used to access an external memory via the system bus interface 107, the EAGA 118 and the EAGB 119 are connected to a fetch port 124 that is a reading port of data from the external memory and to a store port 125 that is a writing port to the external memory. The EXA 120 and the EXB 121 are connected to a transit buffer GUB 115 for updating the GPR 114, and further connected to the store port 125 serving as an intermediate buffer for updating the memory. The FLA 122 and the ELB 123 are connected to an intermediate buffer FUB 117 for updating the FPR 116, and further connected to the store port 125 serving as an intermediate buffer for updating the memory.

At the memory stage (step S106), access to the external memory such as recording of execution results into the external memory or the like is performed by out-of-order execution. Namely, if there are plural instructions of processing requiring such access, access is made in order of obtaining an execution result, regardless processing order in the threads. At the memory stage (step S106), access is made by the fetch port 124 and the store port 125 through a data primary cache 126, the secondary cache 106, and the system bus interface 107. Additionally, when the access to the external memory ends, a notice that the execution is completed is sent from the fetch port 124 and the store port 125 to the CSE 127 via a connection cable (not illustrated).

The EXA 120, the EXB 121, the FLA 122, and the FLB 123 are connected to the CSE 127 with a connection cable that is not illustrated for the sake of simplicity. If processing executed by each computing unit is completed when the respective computing unit finishes execution, without requiring access to the external memory, a notice of execution completion is sent from the respective computing units to the CSE 127 when the execution is completed.

At the commit stage (step S107), the CSE 127 updates a control register 128 for holding operands used for another processing other than the above-described processing in the GPR 114, the FPR 116, the program counters 101, and the CPU 10, in the following manner by in-order execution. A notice of execution completion sent from the computing units or the like to the CSE 127 describes an IID of an instruction corresponding to the notice of execution completion, and data (committing data) necessary for committing a result of the execution, such as a register targeted for updating after completing the instruction. When the notice of execution completion is sent, the CSE 127 stores the committing data described in the notice of execution completion in an entry set with a same IID as the IID described in the notice of execution completion, among the sixty-four entries contained in the CSE 127. And the CSE 127 updates a register in accordance with the committing data corresponding to the instructions that already stored, by in-order execution according to processing order in the threads. When this committing is completed, the instruction corresponding to the committing, which have been held in the reservation station is deleted.

Roughly speaking, the CPU 10 has a structure like the above and operates along the seven stages as explained.

Incidentally, among the instructions executed by the CPU 10, there is an instruction that is prohibited from being executed concurrently with another preceding instruction in a same thread (instruction of sync attribute), because a result of execution of the preceding instruction in the thread is used as an operand. The characteristic of the present embodiment in the CPU 10 lies in processing of an instruction of sync attribute. Hereinafter, explanation will be made with a focus on this point.

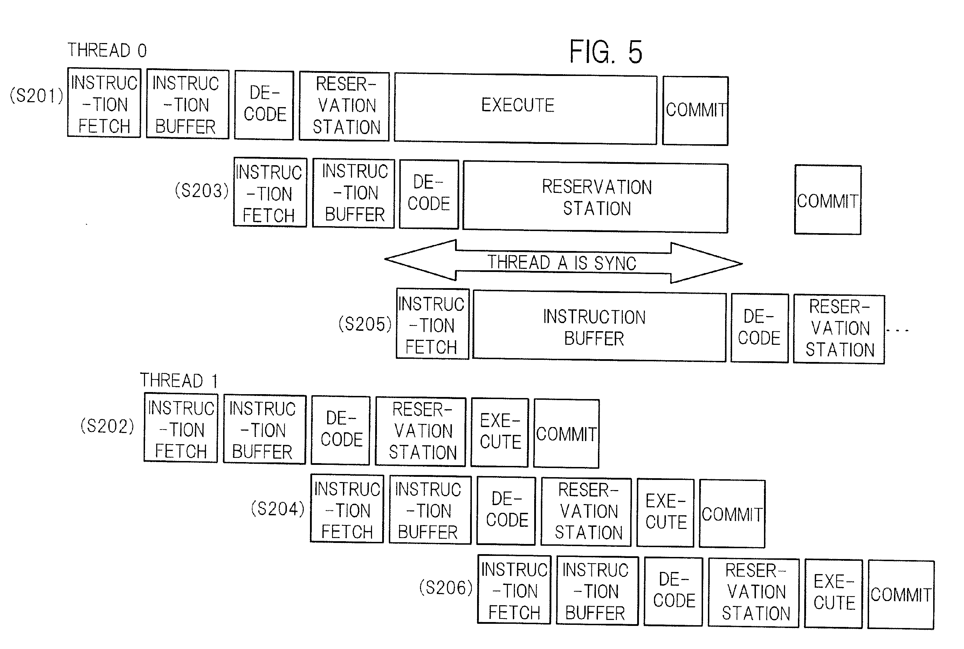

FIG. 5 is a conceptual diagram illustrating processing of an instruction of sync attribute in the CPU 10 of FIG. 4.

FIG. 5 illustrates a state in which, from step S201 to step S206, three instructions belonging to the thread 0, and three instructions belonging to the thread 1 are alternately fetched and processed at each step. In the example of FIG. 5, the second instruction in the thread 0 to be fetched in step S203 is an instruction of sync attribute. In the CPU 10 of the present embodiment, the instruction of sync attribute is held in the reservation station after decoding until its preceding instruction processed in step S201 finishes committing and a necessary operand is obtained, as illustrated in FIG. 5.

Further in the CPU 10 of the present embodiment, at the fetch stage (step S101), the pre-decode section 108 performs pre-decoding to instructions to be issued to the instruction buffer 104 to determine whether or not the instructions are of sync attribute, and puts a flag for indicating a result of determination (sync-flag) to the instructions. If the sync-flag put on the issued instruction indicates sync attribute, the instruction buffer 104 suspends issuing to the decode section 109 and holds instructions following the instruction of sync attribute in a same thread. In the example of FIG. 5, instructions in the thread 0 that are processed after step S205 are held in the instruction buffer 104.

Here, the CPU 10 of the present embodiment contains only one decode section 109 of which circuit structure is complicated and large-scaled, as illustrated in FIG. 4, and the CPU 10 has a structure such that the decode section 109 is commonly used between the two types of threads.

However in the present embodiment, if an instruction in one thread is of sync attribute, the instruction of sync attribute is held in the reservation station and its subsequent instructions are held in the instruction buffer 104. Therefore, the decode section 109 is released from the one thread to which the instruction of sync attribute belongs, making the decode section 109 available for the other thread. By this, as illustrated in FIG. 5, even if processing in the thread 0 stalls, instructions in the thread 1 are processed smoothly.

Hereafter, processing of an instruction of sync attribute will be explained in detail, although the explanation partially overlaps the explanation of FIG. 4.

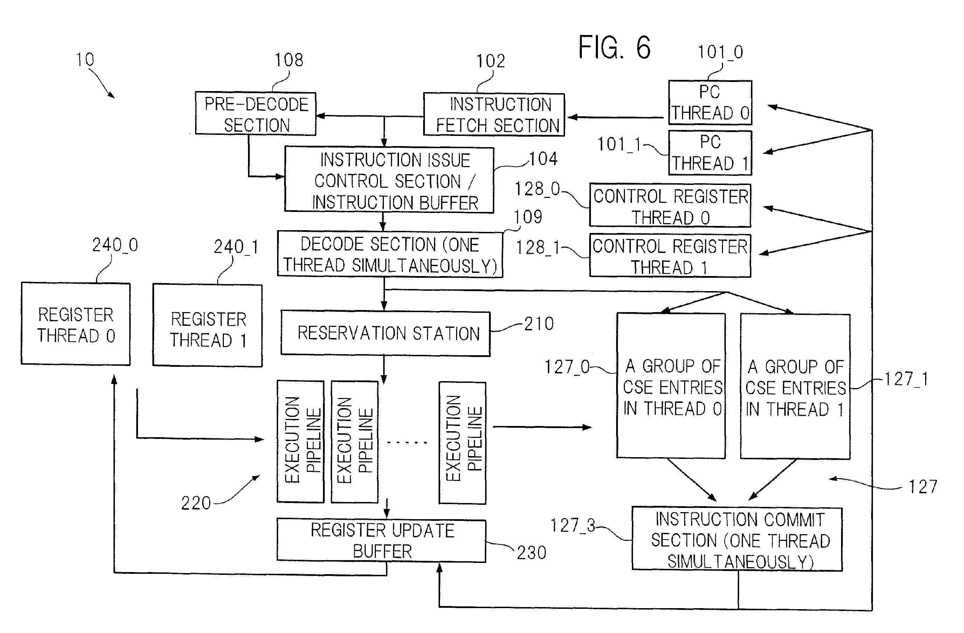

FIG. 6 is a diagram of the CPU 10 partially simplified and partially illustrated in functional blocks, to explain the processing of an instruction of sync attribute.

In this FIG. 6, components having one-to-one correspondence with the blocks of FIG. 4 are illustrated with the same numerals as in FIG. 4.

The CPU 10 contains two program counters, a program counter 101_0 for thread 0 and a program counter 101_1 for thread 1. A command of executing fetching of instructions is alternately given from these two program counters.

The instruction fetch section 102 fetches instructions into the instruction buffer 109 via the instruction primary cache 103 of FIG. 4, in accordance with a command from the two program counters. At this time, the pre-decode section 108 determines whether or not the instructions are of sync attribute and puts a flag (sync-flag) to the instruction for indicating a result of determination.

The instruction buffer 104 is also responsible for controlling issuance of the fetched instructions to the decode section 109, and issues instructions immediately before the instruction of sync attribute, whereas suspends issuance and holds the instructions subsequent to the instruction of sync attribute.

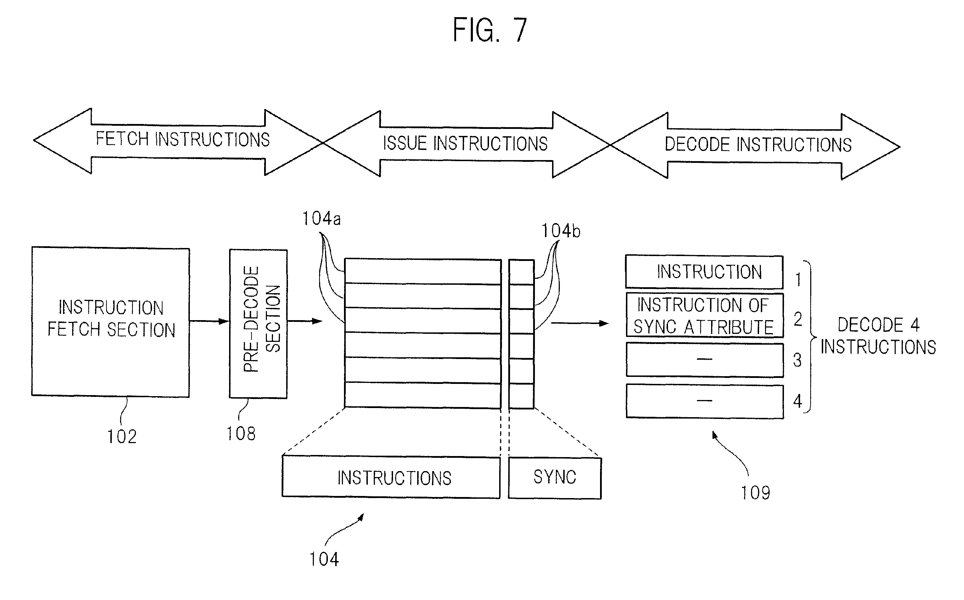

FIG. 7 illustrates a state in which the instruction buffer 104 issues instructions immediately before the instruction of sync attribute to the decode section 109 and suspends issuance and holds the instructions subsequent to the instruction of sync attribute.

As illustrated in FIG. 7, the instruction buffer 104 contains plural entries 104a for holding eight instructions before decoding at plural stages in a same order as the processing order in the threads.

As described above, eight instructions are fetched in one-time fetching by the instruction fetch section 102. When they are fetched, the pre-decode section 108 performs the pre-decoding and puts a flag indicating whether or not the instructions are of sync attribute. Flags of the instructions are stored into a flag storing section 104b provided for each entry, of the instruction buffer 104, with one-to-one association with the eight instructions.

The instruction buffer 104 sequentially issues the instructions stored in the entries 104a, four instructions at a time. At this time, among the instructions to be issued, if there is an instruction with a flag indicating sync attribute, the instruction buffer 104 suspends issuance up to the instruction of sync attribute, and holds subsequent instructions of the same thread in the entries 104a. In the example of FIG. 7, at the time of issuing four instructions of one thread to the decode section 109, a flag indicating sync attribute is put on the second instruction and therefore issuance of instructions after the third instruction inclusive are suspended. Although the decode section 109 can decode four instructions at one-time decoding, when issuance of instructions are suspended halfway as in the example of FIG. 7, decodes only the issued instructions.

Returning to FIG. 6, explanation will continue.

The decode section 109 dispatches the decoded instructions to a reservation station 210 irrespective of whether or not the instructions are of sync attribute.

Here, the decode section 109 allocates IIDs of "0" to "63" to the decoded instructions according to decoding order in each of the threads. And the decode section 109 dispatches the decoded instructions along with their IIDs to the reservation station 210. In this embodiment, the CSE 12 contains thirty-two entry groups 127_0 for thread 0 and thirty-two entry groups 127_1 for thread 1, as described above. When dispatching the decoded instructions to the reservation station 210, the decode section 109 sets the IIDs assigned to the instructions targeted for decoding to empty entries in an entry group for a thread to which the instructions targeted for decoding belong.

In the example of FIG. 6, the four types of reservation stations illustrated in FIG. 4 are simplified and illustrated in one box. The reservation stations contain plural entries each of which stores one decoded instruction.

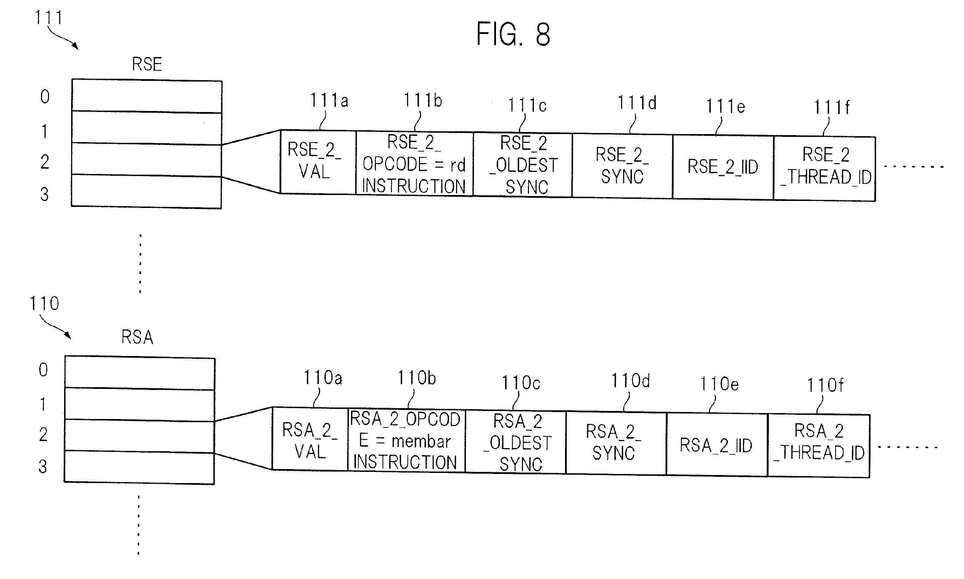

FIG. 8 illustrates entries contained in the reservation stations in detail.

A structure of entries of the reservation stations is common among the four types of reservation stations illustrated in FIG. 4, and FIG. 8 illustrates a structure of entries of the RSE 111 and the RSA 110 illustrated in FIG. 4 as a typical example.

As illustrated in FIG. 8, each entry contains valid tags 110a, 111a for indicating whether or not data described in each entry is valid; instruction tags 110b, 111b for storing decoded instructions; oldest tags 110c, 111c for indicating whether or not instructions stored in the instruction tags are an instruction of after-mentioned oldest type instruction; sync tags 110d, 111d for storing the above-described sync flags indicating whether or not instructions stored in the instruction tags are of sync attribute and whether or not the instructions of sync attribute are in a sync state in which a preceding instruction in a same thread waits for committing; IID tags 110e, 111e for indicating IIDs assigned to the instructions stored in the instruction tags; and thread tags 110f, 111f for indicating a type of thread to which instructions stored in the instruction tags belong.

Furthermore, contents of entries are deleted when the instruction corresponding to the entries completes committing.

In the example of FIG. 8, as an example of an instruction of sync attribute, a rd instruction and a membar instruction that are defined by a SPARC-V9 architecture are illustrated. The rd instruction is an instruction of reading contents of a Processor STATe (PSTAT) register that is a register for storing data indicating a state of the processor. The rd instruction is made executable after preceding instructions complete committing so that the contents of the PSTAT are fixed. When the rd instruction is executed, an integer computing unit is used, so that after decoding, the rd instruction is stored into the RSE 111 connected to the integer computing unit, as illustrated in FIG. 8.

The membar instruction is an instruction for maintaining order such that no subsequent instructions following the membar instruction are processed earlier than the membar instruction, for all the instructions that access a memory prior to the membar instruction. The membar instruction is an instruction of oldest type that is executed when it becomes the oldest in the reservation station for address generation RSA 110. When executing the membar instruction, an address generation computing unit is used, so that after decoding, the membar instruction is stored in the RSA 110 connected to the address generation computing unit, as illustrated in FIG. 8.

Again returning to FIG. 6, explanation will continue.

The reservation station 210 checks a sync flag in the sync tags 110c, 111d. When the sync flag indicates that a state of sync is resolved, meaning that either the instruction is not of sync attribute or its sync state is resolved even if the instruction is of sync attribute, the instruction is dispatched to one execution pipeline 220 corresponding to the reservation station.

Furthermore, if the instruction is of oldest type, when the sync flag indicates a state of sync and preceding instructions exist, the instruction is held in the reservation station 210 and as described above, subsequent instructions in the same thread are held in the instruction buffer 104. Only when no preceding instructions of the same thread exist in the reservation station 210, the instruction is dispatched to one execution pipeline 220 corresponding to the reservation station.

Moreover, if the instruction is of oldest type, only when no preceding instructions of the same thread exist in the reservation station 210, the instruction is dispatched to one execution pipeline 220 corresponding to the reservation station. An instruction with a sync flag indicating a state of sync, and an instruction that is of oldest type and having preceding instructions, even if of which sync flag indicates that a state of sync is resolved, are held in the reservation station 210 and subsequent instructions in the same thread are held in the instruction buffer 104, as described above.

Execution pipelines 220 in FIG. 6 correspond to the six types of computing units illustrated in FIG. 4, respectively. After the execution pipelines 220 finish execution, a result of the execution is stored in a register update buffer 230. This register update buffer 230 corresponds to the GUB 115 and the FUB 117 in FIG. 4. Also, when the execution pipelines 220 finish execution, a notification of execution completion is sent to the CSE 127. As described, in the notification of execution completion, an IID of an instruction having completed execution and a piece of committing data necessary to commit the instruction are described. Upon receipt of the notification of execution completion, the CSE 127 stores the piece of committing data described in the notification of execution completion in an entry set with the same IID as the IID described in the notification of execution completion, among the sixty-four entries contained in the CSE 127.

The CSE 127 also includes an instruction commit section 127_3 for updating a register in accordance with a piece of committing data corresponding to each instruction stored in each of entry groups, 127_0 and 127_1, in processing order in the thread by in-order execution.

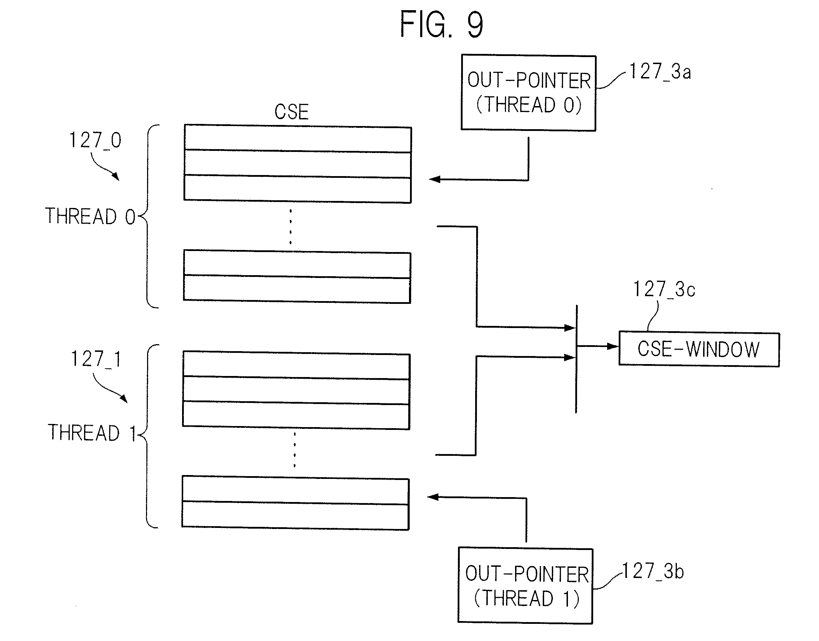

FIG. 9 is a conceptual diagram illustrating how a register is updated by in-order execution in the CSE 127.

The instruction commit section 127_3 contained in the CSE 127 has an out-pointer 127_3a for thread 0 in which an IID of an instruction to be committed next in the thread 0 is described; an out-pointer 127_3b for thread 1 in which an IID of an instruction to be committed next in the thread 1 is described; and a CSE-window 127_3c for determining an instruction to be actually committed.

The CSE-window 127_3c selects either an entry to which the IID of the out-pointer 127_3a for thread 0 is set, or an entry to which the IID of the out-pointer 127_3b for thread 1 is set, and determines an instruction corresponding to the entry in which the committing data is stored as a target of committing. If both entries store the committing data, the CSE-window 127_3c basically switches threads to be committed alternately.

In this way, when the instruction targeted for committing is determined, the instruction commit section 127_3 updates a program counter and a control register corresponding to the thread to which the instruction belongs, as illustrated in FIG. 6. Further, the instruction commit section 127_3 gives a command to the register update buffer 230, such that a register corresponding to the thread to which the instruction targeted for committing belongs is updated, out of registers 240_0, 240_1 provided for each thread, corresponding to the GPR 114 and the FPR 116 in FIG. 4. Moreover, the instruction targeted for committing, which is held in each of the entry groups 127_0, 127_1 of the CSE 127 is deleted.

The CSE-window 127_3c determines an instruction corresponding to the entry storing the committing data as a target for committing, out of an entry to which the IID of the out-pointer 127_3a for thread 0 is set and an entry to which the IID of the out-pointer 127_3b for thread 1 is set. Also, if committing data is stored in both entries, an instruction with an older IID is determined as a target for committing.

When an instruction targeted for committing is determined in this way, the instruction commit section 127_3 updates a program counter and a control register corresponding to a thread to which the instruction belongs, as illustrated in FIG. 6. Further, the instruction commit section 127_3 gives a command to the register update buffer 230, such that a register corresponding to the thread to which the instruction targeted for committing belongs is updated, out of registers 240_0, 240_1 provided for each thread, corresponding to the GPR 114 and the FPR 116 in FIG. 4. In addition, the instruction targeted for committing, which is held in the reservation station 210 is deleted.

In the present embodiment, each time the CSE 127 completes committing, checking is performed for instructions having a sync flag indicating a sync state whether or not reset of the sync flag is possible. This checking is performed for the thread 0 and the thread 1, respectively, and if reset of a sync flag is possible, the sync flag is reset.

Here, in the present embodiment, a check circuit is provided for checking whether or not reset of a sync flag is possible. The check circuit is different between an instruction of oldest type such as the membar instruction and an instruction of non-oldest type such as the rd instruction.

Hereafter, firstly, a check circuit for the non-oldest type instruction will be explained by taking the RSE 111 of FIG. 4 as an example, among the reservation stations 210.

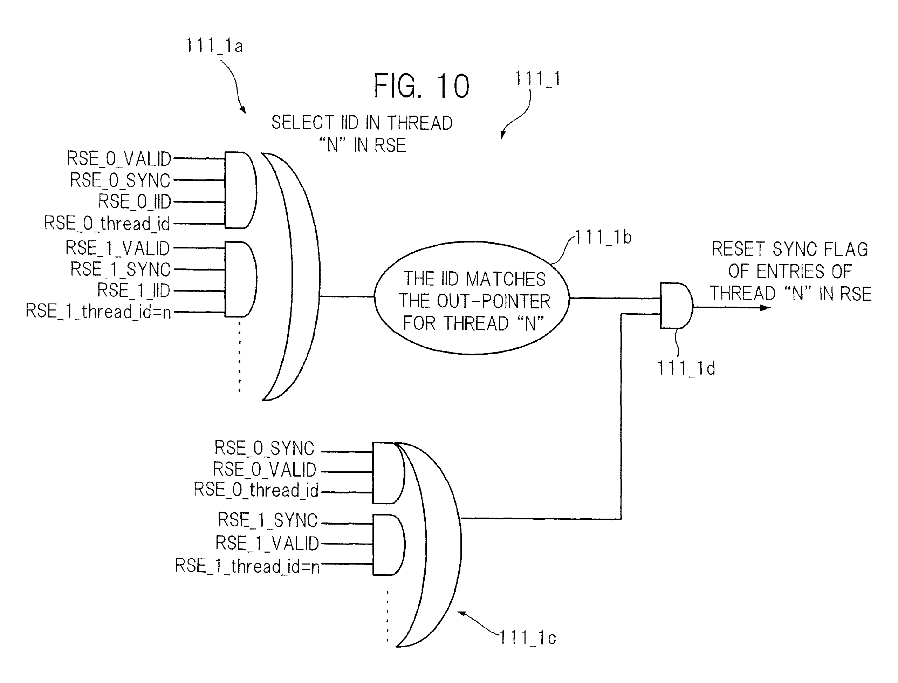

FIG. 10 illustrates a check circuit for checking whether or not reset of a sync flag is possible for instructions of non-oldest type.

In this embodiment, if an instruction of sync attribute in one thread is dispatched to the reservation station, then dispatch of subsequent instructions in the one thread is suspended. Therefore, there is always only one instruction of sync attribute that is dispatched to the reservation station. So in a check circuit 111_1 illustrated in FIG. 10, firstly, an IID of one instruction of which sync flag currently indicates a state of sync is selected in one thread targeted for checking. The check circuit 111_1 includes an IID selection circuit 111_1a for selecting an IID of the one instruction.

The IID selection circuit 111_1a is composed of an AND operator for obtaining AND, for each entry, based on contents of the valid tag 111a, contents of the sync tag 111d, and contents of the IID tag 111e, whether or not a thread indicated by the thread tag 111f, illustrated in FIG. 8, is the thread targeted for checking; and an OR operator for obtaining OR for a result of the AND operator for each entry. By the IID selection circuit 111_1a, an IID of one instruction is obtained, belonging to the thread targeted for checking, having an entry with valid contents, and indicating that the current sync flag is in the sync state.

In the check circuit 111_1 illustrated in FIG. 10, the IDD obtained by the I ID selection circuit 111_1a is described in the out-pointer for the one thread in the CSE 127. A match confirmation circuit 111_1b confirms whether or not the IID matches an IID to be committed next. The match confirmation circuit 111_1b outputs "1" when both matches, that is, when instructions preceding to the instruction in the one thread complete committing and the instruction having the IID is executable.

Here, in the IID selection circuit 111_1a, there is a possibility that although an entry corresponding to the IID of "0" is invalid, the IID of "0" is selected as an IID of the instruction in the sync state. If the IID described in the out-pointer is "0", then an invalid IID is mistakenly confirmed to be matching with an IID of the instruction to be committed next.

Therefore, in order to prevent this situation, the check circuit 111_1 illustrated in FIG. 10 includes an entry validity confirmation circuit 111_1c for checking that an entry corresponding to one instruction in the sync state is valid. The entry validity confirmation circuit 111_1c is composed of an AND operator for obtaining AND, for each entry, based on contents of the valid tag 111a and contents of the sync tag 111d, whether or not a thread indicated by the thread tag 111f, illustrated in FIG. 8, is the thread targeted for checking; and an OR operator for obtaining OR for a result of the AND operator for each entry. By the entry validity confirmation circuit 111_1c, it is confirmed that an instruction with valid contents and whose sync flag is in the sync state exists in a thread targeted for checking. When this instruction surely exists, "1" is outputted from the entry validity confirmation circuit 111_1c.

The check circuit 111_1 illustrated in FIG. 10 includes an AND operator 111_1d for reset determination, by obtaining AND from a confirmation result of the match confirmation circuit 111_1b and a confirmation result of the entry validity confirmation circuit 111_1c. If both confirmation results are "1", then "1" is outputted from the AND operator 111_1d for reset determination.

In the present embodiment, if "1" is outputted from the AND operator 111_1d for reset determination, it is determined that reset of the sync flag of all entries of the thread targeted for checking in the RSE 111 is possible.

Here, in the present embodiment, checking is made for each of the thread 0 and the thread 1 about whether or not reset of sync flag is possible. Therefore, there is a case where reset of sync flag is determined to be possible simultaneously for these two types of threads. Therefore, the present embodiment includes an arbitration circuit for determining, in such case, which thread has a sync flag to be first reset.

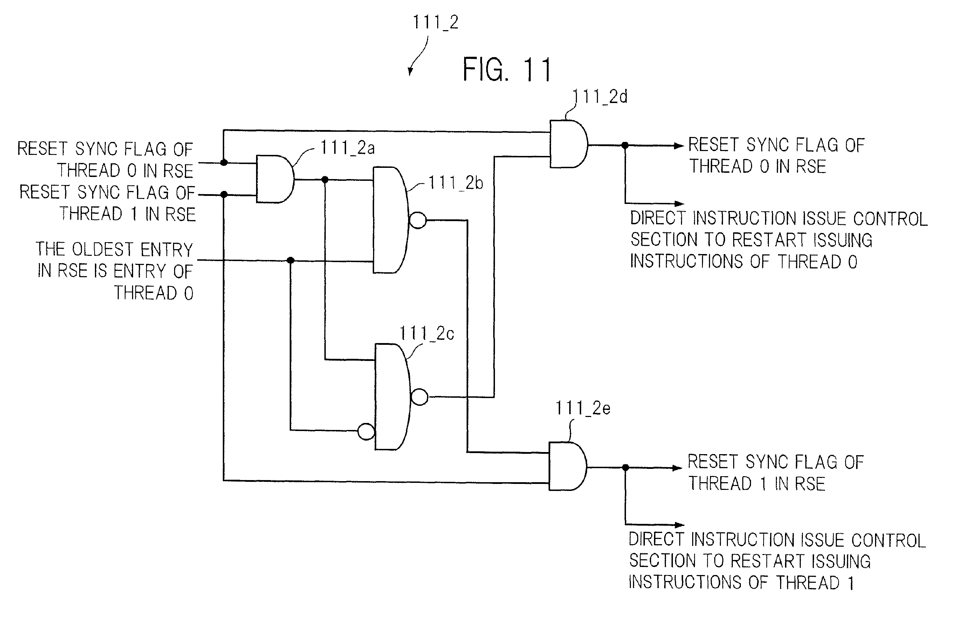

FIG. 11 illustrates an arbitration circuit.

An arbitration circuit 111_2 illustrated in FIG. 11 includes a first operator 111_2a for outputting a value of "1" representing arbitration is necessary when reset of sync flag is possible for the thread 0 and the thread 1; a second operator 111_2b for outputting "1" when an entry requiring arbitration and corresponding to the thread 1 is the oldest in the RSE 111; a third operator 111_2c for outputting "1" when an entry requiring arbitration and corresponding to the thread 0 is the oldest in the RSE 111; a fourth operator 111_2d for determining reset of a sync flag of the thread 0, if reset of the sync flag of the thread 0 is made possible and when the third operator 111_2c outputs "1"; and a fifth operator 111_2e for determining reset of a sync flag of the thread 1, if reset of the sync flag of the thread 1 is made possible and when the second operator 111_2b outputs "1". By this arbitration circuit 111_2, when arbitration is necessary, reset of a sync flag is determined for a thread having an older entry in the RSE 111. Moreover, in the arbitration circuit 111_2, when arbitration is unnecessary, reset of a sync flag is always determined for a thread targeted for reset.

In this way, when a thread targeted for reset is determined in the arbitration circuit 111_2, at the same time, the instruction buffer 104 is instructed to issue instructions of the targeted thread to the decode section 109.

Incidentally, the above-explained process of resetting a sync flag and restarting dispatch of instructions in the RSE 111 is applied to the rd instruction. As described, in the rd instruction, contents of the PSTAT register that is a register for storing data indicating a state of the processor is read. Here, in the CPU 10, the PSTAT register is provided for the two types of threads, respectively.

Here, different from the present embodiment, in a case where the arbitration circuit 111_2 illustrated in FIG. 11 is not provided, when the two types of threads are targeted for reset of sync flag simultaneously, a most simple method for executing two rd instructions is to provide a read port for reading data from the PSTAT register in the number of the threads, namely, two.

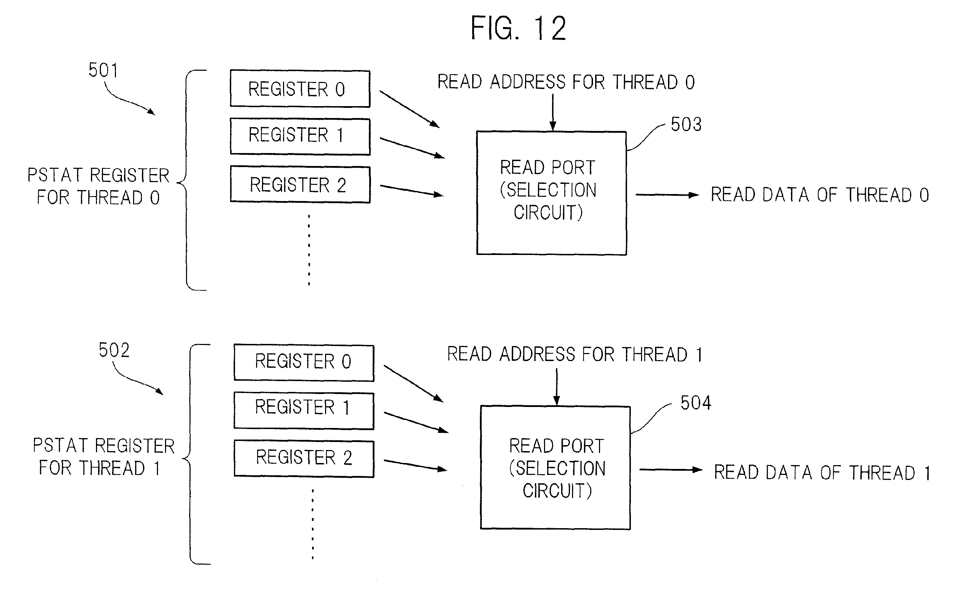

FIG. 12 illustrates an example in which two read ports are provided.

In the example of FIG. 12, two PSTAT registers: a PSTAT register 501 for thread 0 and a PSTAT register 502 for thread 1 are provided. For the respective PSTAT registers, a read port 503 for thread 0 and a read port 504 for thread 1 are provided. The PSTAT register is composed of plural register portions and each read port independently executes read-out of data of the register portions corresponding to read address specified in the rd instruction, as illustrated in FIG. 12. Here, this read port has a large-sized circuit and as illustrated in FIG. 12, if read ports are provided for each of the threads, the circuit scale in the entire CPU becomes larger.

However, the present embodiment includes the arbitration circuit 111_2 illustrated in FIG.11,and a rd instruction that is executed at one time is in either of the two types of threads. Therefore, in the present embodiment, the number of read port is restricted to one and the one read port is commonly used for the two types of threads.

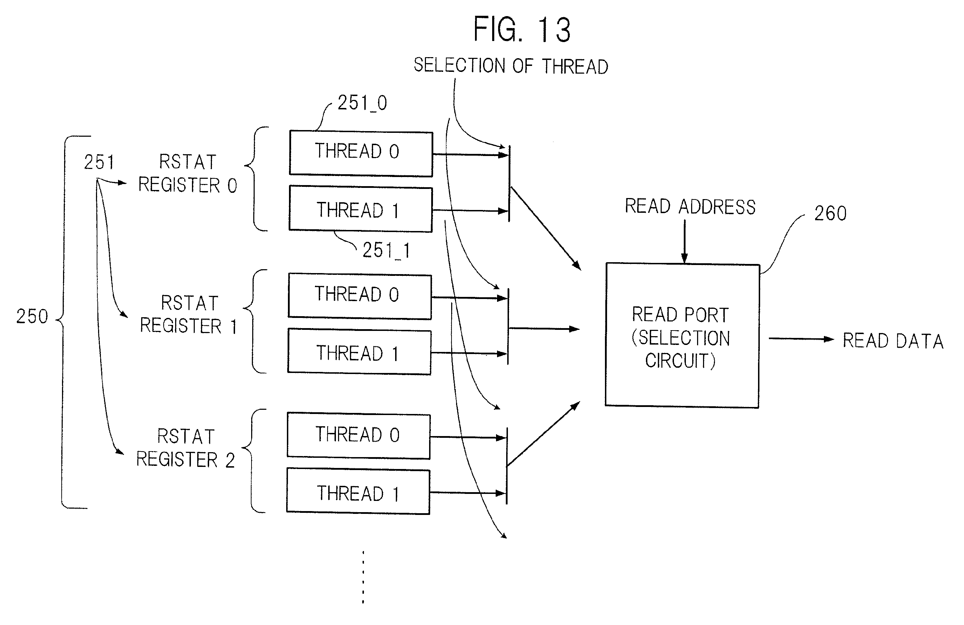

FIG. 13 illustrates a state in which one read port is provided in the present embodiment.

As illustrated in FIG. 13, in the present embodiment, firstly, each of the plural register portions 251 in a PSTAT register 250 is composed of a register portion 251_0 for thread 0 and a register portion 251_1 for thread 1. And one read port 260 is provided for the PSTAT register 250.

In the present embodiment, if the rd instruction in the thread 0 and the rd instruction in the thread 1 are targeted for reset of sync flag simultaneously in the RSE 111, then in the arbitration circuit 111_2 illustrated in FIG. 11, reset of a sync flag is determined for the rd instruction in either of the threads. Thereafter in this rd instruction, the above-described reading address is obtained by the fix point execution unit illustrated in FIG. 4, and the reading address is inputted into the read port 260. In the PSTAT register 250, in each of the register portions 251_1, a register portion corresponding to the thread determined by the arbitration circuit 111_2 illustrated in FIG. 11 is selected as an accessible register portion. When the read port 260 requests data of the inputted read address, data of the register portion corresponding to the read address and corresponding to the thread determined by the arbitration circuit 111_2 is transmitted. By this structure of the present embodiment, the read port 206 is limited to one and thus enlargement of circuit scale of the entire CPU 10 is restricted.

Next, a check circuit for instructions of oldest type will be explained by taking a circuit for checking instructions of oldest type held in the RSA 110 of FIG. 4 as an example, among the reservation station 210.

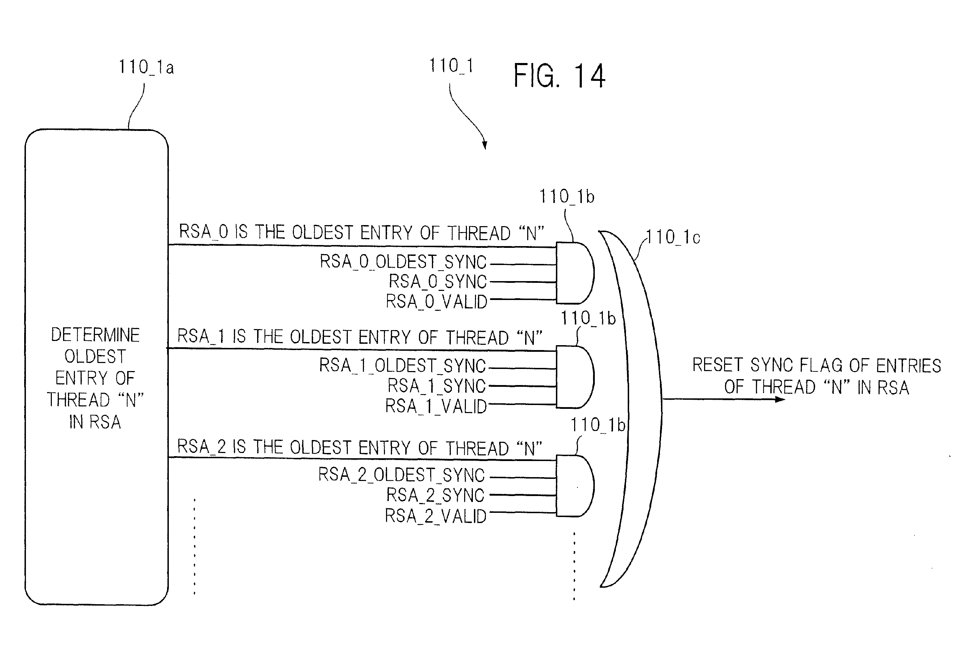

FIG. 14 illustrates a check circuit for checking whether or not reset of a sync flag is possible for instructions of oldest type.

Instructions of oldest type are executed when the instructions become the oldest in the reservation station, among the instructions in a same thread.

Therefore, in the check circuit 110_1 illustrated in FIG. 14, a check is made for an instruction of oldest type whether the instruction is the oldest in a same thread, among instructions stored in the RSA 110. When the instruction is the oldest, a sync flag of the instruction is determined as a target of reset.

The check circuit 110_1 illustrated in FIG. 14 includes an oldest entry obtain circuit 110_la for obtaining an oldest entry in a reservation station. The check circuit 110_1 further contains an AND operator 110_1b for obtaining AND, for each entry, based on contents of the oldest tag 110c, contents of the sync tag 110d, and contents of the valid tag 111a, illustrated in FIG. 8, whether or not the entry is the oldest; and an OR operator 110_1c for obtaining OR for a result of the AND operator for each entry. By this check circuit 110_1, it is confirmed that there is an instruction of oldest type in the sync state in a thread targeted for checking, that the instruction is currently the oldest in the RSA 110, and that a sync flag of the instruction is ready for reset. In the present embodiment, when this confirmation is made, it is determined that reset of sync flags of all the entries in the thread targeted for checking in the RSA 110 is possible.

In this way, when one thread of which sync flag is targeted for reset in the RSA 110 is determined, after resetting the sync flag, the instruction that belongs to the thread and is in the sync state is dispatched to a computing unit for execution. At the same time, the instruction buffer 104 is instructed to restart issuance of instructions of the thread to the decode section 109.

As described above, according to the CPU 10 of the present embodiment, instructions of sync attribute are held in the reservation station 210 and subsequent instructions in a same thread are suspended from being issued to the decode section 109. This prevents occupation of the decode section 109 which hinders decoding of instructions in another thread. Also, in one thread, since instructions subsequent to the instruction of sync attribute is suspended from being issued to the decode section 109 and these subsequent instructions are made to wait for committing, it is possible to avoid a situation in which the decode section 109 is occupied by these subsequent instructions so that decoding of instructions in another thread is hindered. Furthermore, since these subsequent instructions are held in the instruction buffer 104 after being suspended from issuance to the decode section 109, fetching of these subsequent instructions is not wasted and thus efficient. That is, the CPU 10 of the present embodiment can efficiently process instructions.

In the above-described embodiments, the CPU 10 that simultaneously processes instructions in two types of threads is cited as an example of a CPU with the SMT function. However, the CPU with the SMT function may simultaneously process instructions in three types of threads or the like.

## Claims

1. An instruction processing apparatus, comprising:
a decode section to decode a predetermined number of instructions simultaneously, of a thread having a plurality of instruction queues;
an instruction execution section to execute the instructions decoded by the decode section;
a pre-decode section to determine whether or not instructions to be decoded by the decode section is prohibited by a predetermined condition from being executed simultaneously with another preceding instruction in a same thread;
an instruction hold section to hold the instructions decoded by the decode section until the prohibition is released, in a case where simultaneous execution of the instructions decoded by the decode section is prohibited by the determination; and
an instruction issue section to hold instructions subsequent to the decoded instructions without issuing to the decode section, in a case where simultaneous execution of the instructions decoded by the decode section is prohibited by the determination.

2. The instruction processing apparatus according to claim 1, wherein, in a case where the instruction issue section holds instructions without issuing to the decode section, the instruction issue section issues instructions obtained from another thread different from one thread to which the held instructions belong, to the decode section.

3. The instruction processing apparatus according to claim 1, wherein, in a case where the instruction issue section holds instructions subsequent to the instruction prohibited from simultaneous execution in a same thread, without issuing to the decode section, the instruction issue section obtains data indicating that an executable condition is ready for the instruction prohibited from simultaneous execution and restarts issuing the held instructions to the decode section.

4. The instruction processing apparatus according to claim 1, wherein the pre-decode section puts a flag to each of instructions to indicate whether or not the instructions are prohibited from the simultaneous execution, and
the instruction issue section includes an instruction buffer portion to accumulate the instructions with the flags for issuing to the decode section, in a same order as in each thread, issues the instructions accumulated in the instruction buffer portion to the decode section in order of accumulation, and holds instructions subsequent to an instruction whose flag indicates that the simultaneous execution is prohibited, without issuing to the decode section.

5. The instruction processing apparatus according to claim 1, wherein, in a case where the instruction hold section holds a plurality of instructions that are prohibited from the simultaneous execution and when executable conditions are simultaneously ready for the plurality of instructions, the instruction hold section dispatches the plurality of instructions in order in which an instruction held first is dispatched first to the execution section.
